# EUROPEAN PATENT APPLICATION

(11) **EP 4 567 153 A1**
(43) Date of publication of application: **11.06.2025**
(21) Application number: 23213998.0
(22) Date of filing: 04.12.2023
(51) Int. Cl.: C25B 1/04, C25B 11/052, C25B 11/075, C25B 11/091

(54) **CATALYTIC COATING**

(71) Applicant: Electrogenos Ltd, Abingdon OX14 4SB (GB)
(72) Inventor: BARTOLOME, Augusto, Abingdon OX14 4SB (GB)
(74) Representative: J A Kemp LLP

(57) **Abstract**

A method of electrolysing water, the method comprising:
- providing an electrolyser comprising an anode; a cathode and optionally a separator;
- contacting the cathode and/or the anode with an aqueous alkaline solution comprising water; and
- electrolysing the water using a potential difference from the anode to the cathode,
wherein at least one of the cathode and the separator comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B, and wherein the coating catalyses hydrogen evolution at the cathode.

## Description

### INTRODUCTION

There is considerable commercial interest in the production of "green" hydrogen by electrolysis of water. Hydrogen has great potential as a fuel for a wide variety of applications. Further, green hydrogen can be produced using electricity from renewable sources, and so green hydrogen is a desirable replacement for fossil fuels. Accordingly, the optimisation of the production of green hydrogen is of great importance.

Hydrogen production is performed in an electrolyser, comprising an anode and a cathode. In use, a potential difference is applied across the anode and the cathode. The cathode, which is negatively charged, releases electrons which are accepted by hydrogen, allowing hydrogen gas to evolve at the cathode. This production of hydrogen is referred to as the hydrogen evolution reaction (HER). Oxygen gas is evolved at the anode, referred to as the oxygen evolution reaction (OER).

In order to increase the efficiency of production of hydrogen (and oxygen), various strategies may be adopted. For instance, the aqueous solution in the electrolyser may be modified by varying pH, ionic strength, and so on. One such strategy to increase efficiency of hydrogen production is to provide the electrodes in the electrolyser with a catalytic coating. This can reduce the amount of energy needed to produce hydrogen.

Transition metals are often desirable components in such coatings, as they are able to catalyse redox reactions. Platinum is known to have excellent qualities in this regard, but it is extremely expensive and so it is not commercially viable to use platinum-based catalyst materials on a very large scale.

Hydrogen evolution reactions (HER) predominantly occur in acidic or alkaline conditions. Acidic conditions are highly corrosive, and thus in order for a reaction to be sustained it is often necessary to use precious metal (i.e. platinum) catalysts.

While alkaline conditions are not typically as harsh, hydrogen evolution reaction (HER) activities of materials under alkaline conditions are often found to be poor. Numerous efforts have been made to improve the alkaline HER performance of electrocatalysts by lowering the energy barrier of water dissociation through the incorporation of additional water destabilisation species, such as metal oxides and hydroxides. However, the introduction of these species often results in active site blocking. In addition, combinations of transition metals have been considered to boost catalytic performance of transition metal based catalysts. However, this "doping" has mainly been demonstrated in acidic media, and the catalysts obtained mostly exhibited relatively poor HER activity in alkaline electrolytes.

Furthermore, alkaline electrolysers can be difficult to start up and shut down, therefore it is notably difficult to efficiently use intermittent and fluctuating power (for example, that which is provided by renewable energy sources) for conventional alkaline electrolysis.

Cobalt has great potential for the production of catalytic coatings, as it has excellent catalytic activity and is believed to be able to catalyse the production of hydrogen in an electrolyser (see for example "Trends in alkaline hydrogen evolution activity on cobalt phosphide electrocatalysts doped with transition metals", Yana Men et al., Cell Reports Physical Science 1, 100136, 2020). Thus far, however, the use of cobalt in catalytic coatings for electrodes has been avoided as there are very significant difficulties associated with its use.

Cobalt coatings are highly susceptible to corrosion when contacted with the aqueous solutions present in an electrolyser. This can especially be an issue in highly acidic or alkaline conditions. Consequently, coatings containing high levels of cobalt cannot be realistically used for large-scale electrolysis of water under alkaline conditions. The problem of corrosion is particularly pronounced on the high surface-area materials which are desirable as electrodes in electrolysers.

There are strategies available to improve the corrosion resistance of a coating. One strategy which can be used to reduce corrosion resistance of a metallic coating is to alloy the reactive metal with another element. However, this strategy poses considerable difficulties in connection with cobalt alloys. Furthermore, as discussed above, combinations of transition metals exhibited relatively poor HER activity in alkaline electrolytes.

Accordingly, there remains a need for improved catalytic coatings which are highly active under alkaline conditions and cost-effective, allowing them to be used for production of hydrogen on a large scale under alkaline conditions.

### SUMMARY OF THE INVENTION

It has now been found that, by selection of appropriate ratios of chromium and cobalt, it is possible to produce a coating layer on a substrate, which has surprisingly high catalytic activity, provides good corrosion resistance during HER under alkaline conditions, and provides durability under practical conditions of use (i.e. when subjected to repeated shutdown and restart). The catalyst of the invention is also resistant to chromium and iron poisoning which can be associated with risk of explosion due to electrostatic build-up. Furthermore, the catalyst has been tested and shown to be effective for extended periods of time in a harsh environment. This has been achieved by co-depositing both chromium and one or more further transition metals and/or non-metallic elements with cobalt at the ratios described herein. Accordingly, the invention provides a method of electrolysing water, the method comprising:
- providing an electrolyser comprising an anode, a cathode, and optionally a separator;
- contacting the cathode and/or the anode with an aqueous alkaline solution comprising water; and
- electrolysing the water using a potential difference from the anode to the cathode, wherein at least one of the cathode and the separator comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B, and wherein the coating catalyses hydrogen evolution at the cathode. A cathode and/or separator which comprises a substrate and a coating is referred to herein as a coated article.

By "wt%" is meant "weight expressed as a percentage of total weight of the coating". Typically the percentage weight of the components of the coating is such that the total weight of chromium, cobalt and one or more additional transition metals and/or one or more non-metallic elements selected from C, P, N and B is 100%. However, it may also be the case that further components, such as impurities discussed herein, are present.

### BRIEF DESCRIPTION OF THE FIGURES

Figure 1 is an SEM image of nickel foam, coated with a coating as described herein, containing 10.79 wt% chromium, after exposure to an accelerated degradation test.
Figure 2 is an SEM image of a nickel foam coated with a coating produced using a method as described herein except that the suppressing agent was omitted from the electrolyte. Consequently, the coating produced included only 1.29 wt% chromium. The image is taken after exposure of the coated article to an accelerated degradation test, as in Figure 1. The corrosion of the coating is clearly visible.
Figure 3 is a map sum spectrum obtained by summing EDS spectra obtained over the surface of a nickel foam substrate coating produced using a method as described herein except that the nickel precursor salt was omitted from the electrolyte. The spectrum does include nickel, confirming that in the absence of the nickel salt, the process described herein does not lead to complete coverage of the substrate and the nickel substrate remains exposed.
Figure 4 shows an original EDS image of a nickel foam substrate produced using a method as described herein except that the nickel precursor salt and the suppressing agent were omitted from the electrolyte. The density of Cr, Ni and Co is represented by colour density; Cr in yellow, Ni in blue and Co in green. It can be clearly seen that some areas are more yellow, while other areas are more blue, demonstrating that in the absence of all components of the electrolyte, the element coverage produced is not homogenous.
Figure 5 is an SEM image of a nickel foam coated with a coating according to the invention, except that the suppressing agent was omitted from the electrolyte. The uneven nature of the coating is clearly visible. The foam cavities are 100-200 µm in size.
Figure 6 is an SEM image of an etched nickel mesh, coating according to the invention, except that the suppressing agent was omitted from the electrolyte. The mesh is 1-30 µm in size. The uneven nature of the coating is somewhat visible and was confirmed by EDS.
Figure 7 is a photograph of a basic electrolyser setup used to test the ability of coated articles to catalyse the electrolysis of water to produce hydrogen in alkaline conditions.
Figures 8 and 9 are current vs potential plots obtained by electrolysing water in the setup of Figure 7, using a number of coated articles according to the invention and a number of comparative uncoated surfaces.
Figure 10 is SEM images of a coated nickel foam substrate. These images were taken before treatment with KOH.
Figure 11 is SEM images of a coated nickel foam substrate, where a suppressing agent was not used in the production. These images were taken before treatment with KOH. As can be seen, the coating is unevenly distributed showing that the coating is not homogenous.
Figure 12 is SEM images of a coated nickel foam substrate which has been treated under 50% KOH at 125°C for 5 hours. As can be seen the coating still has a smooth surface and has not been subject to high levels of degradation.
Figure 13 is SEM images of a coated nickel foam substrate coated with a coating prepared without the use of a suppressing agent which has been treated under 50% KOH at 125°C for 5 hours.
Figure 14 shows current vs potential plots obtained by electrolysing water in the setup of Figure 20, using a number of coated electrodes according to the invention and electrodes coated with only chromium and only cobalt.
Figure 15 shows current vs potential plots obtained by electrolysing water in the setup of Figure 20, wherein the substrate is a nickel foam substrate, and wherein one plot shows activity of a chromium cobalt coating according to the invention, and one plot shows activity of cobalt alone.
Figure 16 shows current vs potential plots obtained by electrolysing water in the setup of Figure 20, wherein the substrate is a nickel foam substrate, and wherein one plot shows activity of a chromium cobalt coating according to the invention, and one plot shows activity of a Raney Nickel catalyst.
Figure 17 shows current vs potential plots obtained by electrolysing water in the setup of Figure 20, wherein the substrate is a flat surface, and wherein one plot shows activity of a chromium cobalt coating, and one plots shows activity of a platinum sheet.
Figure 18 shows current vs potential plots obtained by electrolysing water in the setup of Figure 20, wherein the substrate is a nickel foam substrate, and wherein one plot shows activity of a chromium cobalt coating according to the invention; one plot shows activity of a Raney Nickel catalyst; and a third plot shows activity of a platinum carbon catalyst.
Figure 19 shows a plot of cell voltage against time, wherein the cell undergoes regular shutdown to provide the conditions similar to an intermittent current. As can be seen the activity of the catalyst (shown by the non-zero voltage) does not decrease throughout the harsh treatment.

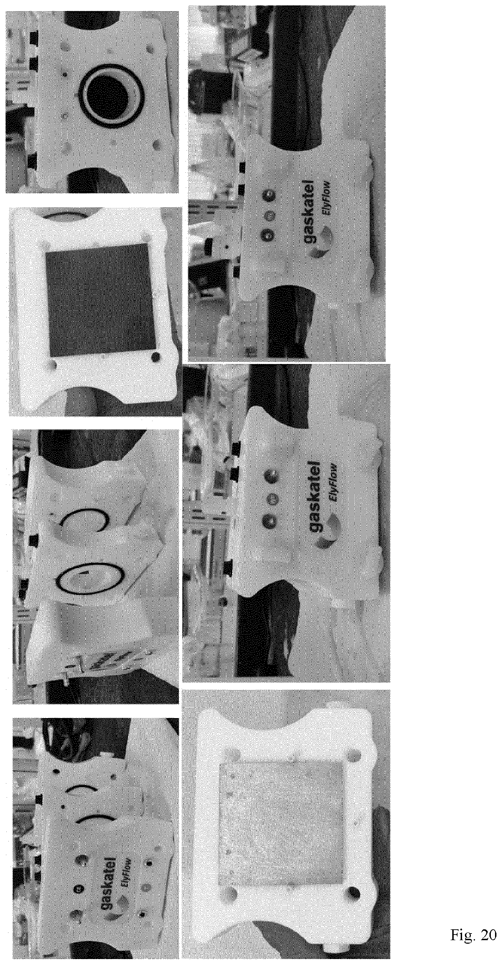

Figure 20 shows assembly process of the cell with photographs of (a) the unassembled Elyflow gaskatel cell with its three parts and counter electrode (CE) connections marked; (b)different view of the Elyflow gaskatel cell with its three parts labelled as 1,2 and 3; (c) graphite plate (counter electrode) mounted on Part 1 of the cell; (d) Part 2 is placed on the Part 1; (e) Nickel plate (working electrode (WE)) mounted on part 3; (f) assembled cell after placing part 3 and tightened the screws and connected to flow chamber; (g) inset shows the reference electrode (RE) compartment and RE is placed into the compartment after electrolyte is introduced.

### DETAILED DESCRIPTION

Unless defined otherwise, all technical and scientific terms used herein have the same meanings as commonly understood by one of skill in the relevant art.

The invention is described hereafter with reference to particular embodiments and drawings. However, the invention is not limited to any specific embodiment or aspect of the following description.

It should be noted that the following descriptions of various aspects of the invention are applicable to each of the differing embodiments of the invention. For instance, the description of the substrate concerns the substrate as used in the methods and the electrolysers described herein.

### Definitions

As used in this specification and the appended claims, the singular forms "a", "an", and "the" include plural referents unless the content clearly dictates otherwise. Thus, for example, reference to "an anode" includes two or more anodes.

Where the term "comprising" is used in the present description and claims, it does not exclude other elements or steps. Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

"About" as used herein when referring to a measurable value such as an amount, a is meant to encompass variations of ± 20 % or ± 10 %, more preferably ± 5 %, even more preferably ± 1 %, and still more preferably ±0.1 % from the specified value, as such variations are appropriate to perform the disclosed methods.

The term "amino acid" is used herein to refer to molecules comprising a carboxylic acid group and an amino group. An amino acid may be charged or uncharged. In particular, the term "amino acid" encompasses species carrying a neutral -COOH group, or the ionised -COO⁻ group. Typical amino acids include arginine, histidine, lysine, aspartic acid, glutamic acid, serine, threonine, asparagine, glutamine, cysteine, glycine, proline, alanine, valine, isoleucine, methionine, phenylalanine, tyrosine and tryptophan. Exemplary amino acids include alanine, valine, glycine, proline, serine and threonine. Particularly preferred amino acids include alanine, valine and glycine; the most preferred amino acid described herein is glycine.

The term "carboxylic acid" is used herein to refer to molecules comprising a neutral -COOH group, or a charged -COO⁻ group. Typically, a carboxylic acid as described herein comprises an alkyl group and a -COOH group, or is formic acid (HCOOH). Preferred carboxylic acids are formic acid and acetic acid.

"Alkyl" as used herein refers to monovalent straight-chained and branched alkyl groups. Typically, the alkyl group is a straight-chained alkyl group. An alkyl group usually has from 1 to 10 carbon atoms (i.e. is a C₁₋₁₀ alkyl group). Preferred alkyl groups include C₁₋₆ alkyl groups, for example C₁₋₄ alkyl groups. Examples of alkyl groups include methyl and ethyl groups.

As used herein, the term "ceramic" refers to an inorganic, non-metallic solid. Typically, "ceramic" refers to an oxide, boride or nitride or a metal or metalloid element. Exemplary ceramics include oxides of tellurium, selenium, cerium, aluminium, zirconium, titanium, magnesium and silicon. Particularly preferred is tellurium dioxide.

As used herein, the term "nanoparticle" refers to a particle having at least one dimension which is in the range of 1 nm - 1000 nm in length. Preferably a nanoparticle has a diameter of 1 nm - 1000 nm, the diameter being the largest dimension of the particle in question.

As used herein, the term "salt" encompasses both a solid salt and a salt which is dissociated in solution (typically aqueous solution). Generally, unless the context indicates otherwise, the term "salt" as used herein refers to a dissociated salt in solution (typically aqueous solution).

As used herein, the term "metallic" is used to refer to a solid substance which consists essentially of, or consists entirely of, one or more metals. For instance, a metallic substance may comprise at least 90% metal by weight, or at least 95% metal by weight, preferably at least 99% metal by weight. In practice, a metallic substance may contain unavoidable impurities and so a metallic substance which "consists entirely of" one or more metals contains only metal atoms, together with unavoidable impurities. By way of example, a metal may comprise or consist of elements appearing in groups 1-12 of the periodic table. Preferably, a metallic substance as described herein comprises or consists of a d-block metal. By this is meant that the metallic substance comprises or consists of one or more metals appearing in any of groups 3-12 of the periodic table.

A metallic substance may be an alloy, containing more than one type of metal atom, or may contain only one type of metal atom. As used herein, the term "non-metallic element" has its usual definition in the art. Typically, a non-metallic element is an element selected from hydrogen, helium, boron, carbon, nitrogen, oxygen, fluorine, neon, silicon, phosphorus, sulfur, chlorine, argon, germanium, arsenic, selenium, bromine, krypton, antimony, tellurium, iodine, xenon and radon.

The term "electrolyser" is used herein to refer specifically to an electrolytic cell which uses an external electric current to drive the electrolysis of water, ultimately producing hydrogen and oxygen. An electrolyser may utilise any known water electrolysis technology, for instance alkaline water electrolysis; acidic water electrolysis; proton-exchange membrane water electrolysis; anion-exchange membrane water electrolysis; microbial electrolysis; and high-temperature water electrolysis. The electrolyte included within the electrolyser comprises salt water, or a neutral electrolyte, or an acidic or alkaline solution, or a buffered solution, or one of the above with additives. Preferably, the electrolyser is an electrolyser configured for alkaline water electrolysis.

An "electrodeposition process" may also be referred to as an electroplating process or galvanic deposition process in the art, and is a process in which a layer comprising or consisting of a metal is deposited onto a substrate under the influence of an electric field.

A separator may be a membrane or a diaphragm. The separator is permeable to ions or ionic charge transfer, and separates the gasses produced at the anode and the cathode respectively. The skilled person will be familiar with suitable separators, e.g. membranes and diaphragms, for use in an electrolyser.

### Method of electrolysing water

The use of an article (i.e. a cathode or a separator, preferably a cathode) having a coating as described herein allows for an efficient HER reaction in alkaline conditions. The methods described also allow for sustained HER, enabled by the lack of degradation of the catalyst used over time. Particularly described herein is a method of electrolysing water (i.e. a method of alkaline water electrolysis), the method comprising:
- providing an electrolyser comprising an anode, a cathode, and optionally a separator;
- contacting the cathode and/or the anode with an aqueous alkaline solution comprising water; and
- electrolysing the water by applying a potential difference from the anode to the cathode,
wherein at least one of the cathode and the electrolyser is a coated article as described herein. Preferably, the cathode is coated with a coating as described herein. Alternatively or additionally, the separator may be coated with a coating as described herein. Thus, the cathode is preferably a coated article as described herein. Alternatively or additionally, the separator (membrane or diaphragm) may be a coated article as described herein.

Preferably, the method is a method of alkaline water electrolysis involving:
- contacting the anode and/or the cathode with a caustic solution, such as sodium hydroxide solution or potassium hydroxide solution, most preferably potassium hydroxide solution.

As discussed above, typically electrolysis in alkaline conditions is poor and does not allow efficient production of hydrogen. Transition metal combinations have been tried in acidic conditions, however these are limited in their longevity of use due to the harsh acidic environment which is typically only suitable for long term use with precious metals (e.g. platinum).

The present inventors have surprisingly found that by carrying out alkaline hydrolysis using a catalyst as described herein, degradation of the catalyst is reduced and therefore long-term efficient HER is possible in alkaline conditions. This is even possible in conditions where the electrolyser is subjected to a plurality of rapid shut downs and start-ups, which were previously believed to be incompatible with alkaline electrolysers.

### Coated article

A coated article, comprising a substrate and a coating, is used in the described methods of electrolysis and electrolysers. The coated article may be obtained or obtainable by the process for producing a coated article as described herein. In particular, the coated article may be obtained or obtainable by an electrodeposition process.

The coated article is a solid object. The precise form of the coated article may vary.

The coated article may be capable of conducting electric charge, and is capable of catalysing reactions. Accordingly, the coated article may be used as an electrode; or may be an electrode. The coated article may be in any form suitable for use as an electrode; merely by way of example, the coated article may be in the form of a plate, fin, foam, rod or mesh. The coated article may comprise one or more electrical terminals to enable an electrical connection to be made to the article.

Alternatively or additionally, a coated article may be used as a separator (e.g. a membrane or diaphragm) in an electrochemical cell, or may be a separator (e.g. a membrane or diaphragm) in an electrochemical cell.

In particular, the coated article is able to catalyse the electrolysis of water. In consequence, the invention also relates to the use of a coated article as described herein to electrolyse water under alkaline conditions. For example, the invention relates to the use of a coated article as described herein in a method of alkaline water electrolysis as described herein. The invention also relates to an electrolyser, comprising one or more coated articles as described herein; particularly to an electrolyser comprising a cathode which is a coated article as described herein. Further, the invention relates to the use of a coating as described herein as a hydrogen evolution catalyst in a method of alkaline water electrolysis.

The coated article is particularly useful as an electrode in alkaline water hydrolysis. Accordingly, the invention particularly relates to an electrolyser comprising:
- a cathode;
- an anode;
- optionally a separator; and
- optionally an aqueous alkaline solution,
wherein at least one of the cathode and the separator, where present, comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B, and wherein the coating is for catalysing hydrogen evolution at the cathode.

In particular, the electrolyser may comprise:
- a cathode which comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B (i.e. the cathode is a coated article as described herein);
- an anode; and
- optionally an aqueous alkaline solution, typically comprising aqueous potassium hydroxide.

The electrolyser typically also comprises a separator (e.g. a membrane/ diaphragm). The skilled person is readily aware of electrolyser constructions in which the coated article may be used.

### Coating

The coated article comprises a coating. The coating may comprise 9.5 to 35 wt% chromium and 10 to 75 wt% cobalt. The remainder of the composition may comprise, for example, one or more further transition metals and/or one or more non-metallic elements. Typically, the coating comprises 9.5 to 35 wt% chromium, 10 to 75 wt% cobalt and 10 to 60 wt% one or more additional transition metals and/or one or more non-metallic elements selected from carbon, phosphorus, nitrogen and boron (C, P, N and B).

When the one or more transition metals and/or one or more non-metallic elements comprise one more transition metals, the one or more additional transition metals are preferably selected from titanium, vanadium, manganese, iron, nickel, copper, zinc and molybdenum. Often the one or more transition metals are selected from titanium, vanadium, manganese, nickel, copper, and zinc. Typically at least one of the one or more additional transition metals is nickel. Often the one or more additional transition metals and/or one or more non-metallic elements is one additional transition metal. Typically when the one or more additional transition metals and/or one or more non-metallic elements is one additional transition metal, it is nickel. In these cases, the coating typically comprises 9.5 to 35 wt% chromium, 10 to 75 wt% cobalt and 10 to 60 wt% nickel.

When the one or more transition metals and/or one or more non-metallic elements comprises one or more non-metallic elements the one or more non-metallic elements are selected from boron, carbon, nitrogen and phosphorus. The one or more transition metals and/or one or more non-metallic elements may comprise one or more non-metallic elements selected from boron and phosphorus. In these cases, the coating typically comprises 9.5 to 35 wt% chromium, 10 to 75 wt% cobalt and 10 to 60 wt% boron, phosphorus or a mixture thereof, such as 9.5 to 35 wt% chromium, 10 to 75 wt% cobalt and 10 to 60 wt% phosphorus. The one or more transition metals and or one or more non-metallic elements may comprise carbon. In these cases, the coating typically comprises 9.5 to 35 wt% chromium, 10 to 75 wt% cobalt and 10 to 60 wt% carbon, preferably around 10 to 20 wt% or around 10 to 15wt% carbon.

When the one or more transition metals and/or one or more non-metallic elements comprise both transition metals and non-metallic elements, the coating typically comprises 9.5 to 35 wt% chromium, 10 to 75 wt% cobalt and one or more transition metals and one or more non-metallic elements selected from C, P, N and B, wherein the total weight of the one or more transition metals and one or more metallic elements is 10 to 60 wt%, such as 9.5 to 35 wt% chromium, 10 to 75 wt% cobalt and 10 to 60 wt% nickel, phosphorus and combinations thereof; or such as 9.5 to 35 wt% chromium, 10 to 75 wt% cobalt and 10 to 60 wt% nickel, carbon and combinations thereof.

If the amount of chromium is less than 9.5 wt%, the ability of the coating to resist corrosion is insufficient. Accordingly, the coating comprises at least 9.5 wt% chromium. However, the amount of chromium should not be so large that the quantity of other transition metals (and any additives present) is reduced to a low amount. Accordingly, the coating may comprise up to 35 wt% chromium, or up to 20 wt% chromium. In particular, the coating may preferably comprise from 9.5 to 20 wt% chromium. For instance, the coating may comprise about 10, 11, 12, 13, 14, 15, 16 or 17 wt% chromium, i.e. from about 10 to 17 wt% chromium.

If the amount of cobalt is less than 10 wt%, the ability of the coating to catalyse reactions (particularly the electrolysis of water) is less than optimal. However, if the amount of cobalt is above 75 wt%, the susceptibility of the coating to corrosion increases, as the amount of chromium and further components present is restricted. Typically, the coating comprises at least 25 wt% cobalt, or at least 40 wt% cobalt; similarly, the coating typically comprises no more than 60% cobalt, such as no more than 50 wt% cobalt. Accordingly, it is preferred that the coating comprises from 20 to 75 wt% cobalt, more preferably 20 to 60 wt% cobalt, for instance from 20 to 30 wt% cobalt or from 45 to 55 wt% cobalt. Typically, the coating comprises from 35 to 60 wt% cobalt.

One or more additional transition metals and/or one or more non-metallic elements selected from C, P, N and B may be present in the coating. These additional transition metals and/or non-metallic elements may assist the effective co-deposition of cobalt and chromium. Preferably, the coating comprises no more than 60 wt% additional transition metals and/or non-metallic elements or no more than 55 wt% additional transition metals and/or non-metallic elements, and in some cases no more than 40 wt% additional transition metals and/or non-metallic elements (although the coating always comprises at least 10% additional transition metals and/or non-metallic elements). For instance, the coating may preferably comprise 20 to 55 wt% additional transition metals and/or non-metallic elements. For example, the coating may comprise about 20 to 40 wt% additional transition metals and/or non-metallic elements or 45 to 55 wt% additional transition metals and/or non-metallic elements.

Thus, in a preferred example, the coating may comprise 9.5 to 20 wt% chromium, 20 to 60 wt% cobalt, and 20 to 60 wt% one or more additional transition metals and/or non-metallic elements selected from C, P, N and B. For instance, the coating may comprise 9.5 to 15 wt% chromium, 45 to 55 wt% cobalt and 20 to 35 wt% one or more additional transition metals and/or non-metallic elements selected from C, P, N and B. In this aspect, the substrate typically comprises nickel. In another example, the coating may comprise 15 to 20 wt% chromium, 20 to 30 wt% cobalt and 45 to 55 wt% one or more additional transition metals and/or non-metallic elements selected from C, P, N and B. In this aspect, the substrate typically comprises copper.

Thus, in a preferred example, the coating may comprise 9.5 to 20 wt% chromium, 20 to 60 wt% cobalt, and 20 to 60 wt% nickel. For instance, the coating may comprise 9.5 to 15 wt% chromium, 45 to 55 wt% cobalt and 20 to 35 wt% nickel. In another example, the coating may comprise 15 to 20 wt% chromium, 20 to 35 wt% cobalt and 45 to 55 wt% nickel. In this aspect, the substrate typically additionally comprises copper.

It is possible to determine the elemental composition of the coating described herein by energy-dispersive X-ray spectroscopy, which is a technique well-known in the art. The technique may be referred to variously herein as EDXS, EDX or EDS. The elemental composition of the coating described herein is preferably determined by this technique. Accordingly, the percentage by weight (wt%) of each of Cr, Co and additional transition metals and/or non-metallic elements selected from C, P, N and B in the coating described herein is preferably determined by energy-dispersive X-ray spectroscopy. Similarly, the percentage by weight (wt%) of any other element or compound present in the coating described herein is preferably determined by energy-dispersive X-ray spectroscopy.

The coating described herein may or may not be exposed to the environment.

In some cases, one or more additional coatings may optionally be applied to the coating described herein. In such cases, the coating described herein is not exposed to the environment. The one or more additional coatings may include, by way of example, a further corrosion-resistant coating. One example of a further corrosion-resistant coating is a layered double hydroxide coating. Another example is a carbon coating, which may be produced by carbon vapour deposition (CVD).

Preferably, however, further coating(s) are not applied to the coating described herein. In such cases, the coating described herein is exposed to the environment. The environment will vary depending on the location of the coated article. For instance, if the coated article is located within an electrolyser, the environment directly adjacent to the coated article acting as a cathode will typically include an aqueous solution. For instance, where the electrolyser is an alkaline water electrolyser, the environment surrounding the coated article will typically include an aqueous alkaline solution, generally comprising aqueous potassium hydroxide.

Thus, in a preferred aspect, the coating directly contacts the substrate, and the coating is exposed to the environment.

The thickness of the coating is not particularly limited. However, if the coating is excessively thin, it may not sufficiently promote catalytic activity and its long term durability may be hindered. If the coating is too thick, the cost of producing the coating may be unnecessarily high. Accordingly, the thickness of the coating is generally at least about 1 micron. The thickness of the coating is the thickness as measured in a direction perpendicular to the surface of the substrate. Preferably the thickness of the coating is in the region of 2 microns to 10 microns.

A particular advantage of the coating described herein is that it can be highly homogenously distributed across the coated surface of the substrate. That is, not only is the coating typically distributed across the entirety of the substrate's coated surface, but also the chemical composition of the coating is homogeneous throughout the coating. Thus, in a preferred aspect, the coating described herein is present on the entire surface (or coated surface) of the substrate. In other words, the coating is formed without holes. The coated surface of the substrate is preferably not exposed to the environment, at any point.

In a particularly preferred aspect, the Cr content of the coating varies by no more than 20wt% across the coated surface of the substrate. That is, it is preferred that the maximum local wt% of Cr at any point on the coated surface is no more than 10% above the mean wt% of Cr, and the minimum local wt% of Cr at any point on the coated surface is no more than 10% below the mean wt% of Cr. For instance, any local 10x10 micron region of the coating may have a wt% concentration of Cr deviating from the mean wt% Cr in the coating by no more than 10%. Still further preferably, the Cr content of the coating varies by no more than 10 wt% across the coated surface, measured as described above.

Similarly, in another preferred aspect, the Co content of the coating varies by no more than 20% or no more than 10% across the surface of the substrate. In yet another preferred aspect, the additional transition metal and/or non-metallic element selected from C, P, N and B content of the coating varies by no more than 20% or no more than 10% across the surface of the subject. These values may be measured as described in connection with Cr, in the preceding paragraph.

The coating described herein may be provided on all or part of the surface of the substrate. It is possible to avoid providing the coating on any part of the substrate's surface, for instance by masking that part (or those parts) of the substrate's surface. Accordingly, it should be noted in connection with the above discussion of the homogeneity of the coating, the homogenous properties discussed refer to the properties of the coating observed on the part(s) of the substrate's surface actually intended to be coated with the coating described herein. This may be the portion of the substrate's surface exposed to a process for producing a coated article, as described herein. That portion of the surface may be referred to as the "coated portion". Thus, the coating is highly homogenous as discussed above across the *coated portion* of the substrate's surface.

The coated portion may comprise at least 50% of the surface area of the substrate, typically at least 75%, such as at least 85%, 90%, 95% or at least 99%.

The coating may or may not be metallic, as described herein. The coating typically comprises at least 60, 70 or 80 wt% metal, or at least 85 wt% metal; preferably at least 90 wt% metal. For instance, the coating may consist of cobalt, chromium and one or more further transition metals and/or one or more non-metallic elements selected from C, P, N and B, together with unavoidable impurities.

However, the coating may also comprise other chemical components. These other components discussed in the following section.

### Additives

In addition to the essential elements Cr, Co and one or more further transition metals and/or one or more non-metallic elements selected from C, N, P and B, the coating may optionally comprise one or more other chemical components, referred to herein as additives. An additive is a species which is deliberately included in the coating.

The additive(s) may each individually be an element, a compound or a mixture. The additive(s) may be introduced by different routes. In one example, the additive(s) may be included in the coating by co-deposition with Cr, Co and the one or more further transition metals and/or one or more non-metallic elements selected from C, P, N and B, during production of the coating. Such additive(s) may include one or more metals, for example iron and molybdenum. In another example, particles of an additive may be included in the coating. For instance, particles of an additive may be present during production of the coating, and may become embedded in the coating as it forms. One or more additives may be introduced by each of these routes, or not at all.

Generally, where an additive is present, the additive is in the form of particles. Typically, the additive is present in the form of nanoparticles.

In some embodiments additive materials do not include transitions metals and non-metallic elements selected from carbon, boron, nitrogen and phosphorus.

Preferably, additive materials include ceramic (especially tellurium dioxide) and selenium dioxide. These additive materials increase the conductivity of the coating and improve performance as an electrolyser. These additives, where present, are preferably in the form of nanoparticles.

The coating may comprise 9.5 to 35 wt% chromium, 10 to 75 wt% cobalt and 10 to 60 wt% one or more additional transition metals and/or one or more non-metallic elements selected from phosphorus and boron (P and B). In this case, exemplary additive materials include ceramic (especially tellurium dioxide), selenium dioxide, graphene, doped graphene (particularly graphene doped with one or more non-metals, such as nitrogen-doped graphene), and graphene oxide, in particular graphene oxide. These additives, where present, are preferably in the form of nanoparticles.

The coating may comprise 9.5 to 35 wt% chromium, 10 to 75 wt% cobalt and 10 to 60 wt% nickel. In this case, exemplary additive materials include ceramic (especially tellurium dioxide), selenium dioxide, graphene, doped graphene (particularly graphene doped with one or more non-metals, such as nitrogen-doped graphene), graphene oxide iron and molybdenum, in particular ceramic (especially tellurium dioxide), selenium dioxide, graphene, doped graphene (particularly graphene doped with one or more non-metals, such as nitrogen-doped graphene), graphene oxide. Graphene oxide is preferred. These additives, where present, are preferably in the form of nanoparticles.

Where one or more additives are present, the coating typically comprises up to 20 wt% of the additive(s) (wt% being percentage by total weight of the coating). Preferably, where one or more additives are present, the coating comprises up to 10 wt% of the additive(s). For instance, the coating may comprise about 1, 2, 3, 4, 5, 6, 7, 8, 9 or 10 wt% of additive(s).

For completeness, it should be noted that the coating may also contain one or more unavoidable impurities, which are not deliberately added. Unavoidable impurities are typically elements, but may be compounds or mixtures. Specific examples of impurities include oxygen. The coating may comprise oxygen as an unavoidable impurity. For instance, the coating may comprise up to 20wt% oxygen. Manipulation of electrodeposition conditions may increase or decrease the amount of oxygen present; if the conditions are adjusted to deliberately increase the amount of oxygen present, oxygen may be present as an additive in addition to being an unavoidable impurity. Other examples of elements which may be present as unavoidable impurities include counter-ions present when the coating is prepared by electrodeposition (including, for instance, Cl or K).

### Substrate

The coated article comprises a substrate. The substrate may be a metallic substrate, wherein a metallic substrate is a solid, metallic object capable of conducting electricity. The coated article may be a coated electrode, wherein the substrate may be a cathode. The substrate may be a non-metallic substrate, such as a polymer substrate, or a substrate comprising graphene or graphite. The substrate may be a separator, for example a separator in an electrochemical cell. The precise form of the substrate may vary. As explained above, in connection with the coated article, the substrate may typically be an electrode suitable for use in an electrolyser. The substrate may for instance be in the form of a plate, fin, foam or rod. The substrate may comprise one or more electrical terminals to enable an electrical connection to be made to the substrate.

The substrate may consist of a single material, or may contain two or more different materials. Simply by way of illustration, it is noted that the substrate may comprise a metallic object coated with a metallic coating (other than the coating described herein).

Where the coated article is a cathode, the substrate may comprise or consist of steel. Any grade of steel may be used, in particular stainless steel. Stainless steel is a highly durable material desirable for many industrial processes. Alternatively or additionally, the substrate may comprise or consist of nickel. Nickel is a chemically resistant material which strongly binds to the coating described herein. For instance, the substrate may comprise or consist of steel (in particular stainless steel) and/or nickel. Preferably, the substrate consists of steel (in particular stainless steel) and/or nickel.

It is preferred that the substrate has a rough surface. The coated article produced therefrom is often intended for use as a catalyst, and the efficiency of the catalyst is typically greatly enhanced by the presence of a large surface area to maximise the contact between catalyst and any reactant(s). However, even with the highly homogeneous coating described herein, it can be difficult to deposit the coating homogeneously on an excessively rough surface.

Preferably, therefore, the substrate may have a surface roughness of up to 100 microns, or up to 50 microns. Typically, the substrate may have a surface roughness of at least 0.1 microns or at least 1 micron. For instance, the substrate may have a surface roughness of from 0.1 to 100 microns, particularly from 1 to 50 microns. A suitably rough surface can be achieved by, for instance, pickling the substrate in acid (such as HCl) before the coating is deposited thereon or using a high surface area substrate such as a foam.

Surface roughness is usually measured with a scanning electron microscope (SEM). Techniques for determining surface roughness by this method are well known. Typically, the size of surface features within a sample area is determined (usually by determining their height from the surface) and a mean value of feature height can then be calculated, which provides the surface roughness. The surface roughness described is typically a mean surface roughness as determined by SEM.

In order to achieve very high surface area, the substrate may comprise a microstructured surface. That is, the substrate may comprise regular or irregular forms, having at least one dimension in the size range 1-1000 microns, preferably 2-500 microns. These regular or irregular forms typically have no dimension larger than 1-1000 microns, preferably no larger than 2-500 microns.

Exemplary microstructures which may be present on the surface of the substrate include nanowires, microchannels and high aspect ratio structures. Other such microstructures include cavities or holes (for instance, where the substrate comprises or consist of a foam or a mesh). Thus, in one aspect, the substrate may comprise or consist of a foam comprising cavities having at least one dimension in the size range 1-1000 microns, preferably 2-500 microns. In another aspect, the substrate may comprise or consist of a mesh wherein the mesh hole size is in the size range 1-1000 microns, preferably 2-500 microns.

A microstructured surface as described above may also be roughened by the presence of smaller structures in addition to the microstructures discussed above. The surface may be described as having dual-order roughness, or double roughness. For instance, where the surface comprises microstructures with dimensions of 100-1000 microns, these structures may be further roughened by substructures having dimensions of 0.001 to 10 microns. In another example, where the surface comprises microstructures with dimensions of 10-100 nm, these structures may be further roughened by substructures having dimensions of 0.001 to 1 microns. In yet another example, where the surface comprises microstructures with dimensions of 1-10 nm, these structures may be further roughened by substructures having dimensions of 0.001 to 0.1 microns.

It should be noted that the discussion of surface roughness above relates to the surface(s) of the substrate to which the coating described herein is applied. The substrate may comprise one or more other surfaces, or parts of a surface, which are not to be coated and which may or may not have a roughness as discussed above.

### Electrolyte

An electrolyte may be used in the process of the invention, and may be used to produce the coated articles described herein.

The electrolyte is a liquid, specifically an aqueous solution. The electrolyte used to produce the coated articles described herein will now be further defined.

The electrolyte comprises the ingredients necessary to produce a coated article as described herein in an electrodeposition process as described herein. The electrolyte comprises water, a chromium salt, a cobalt salt, a salt of one or more further transition metals and/or a salt of one or more non-metallic elements and a suppressing agent. Typically, the electrolyte comprises water, a Cr(III) salt, a cobalt salt, a salt of one or more further transition metals, and a suppressing agent or solvent.

Each salt typically comprises a metal ion and at least one counter-ion. However, all salts are in solution, and consequently in dissociated form. Thus, in solution the counter-ion(s) are not typically associated with the metal ion(s). These salts may be referred to as "precursor salts", as they act as a source of Cr, Co and the one or more transition metals and/or one or more non-metallic elements selected from C, N, P and B to be deposited on a substrate during an electrodeposition process. Thus, the Cr(III) salt may be referred to as, for instance, a Cr(III) precursor salt or a Cr precursor salt; the Co salt may be referred to as a Co precursor salt, the salt(s) of the one or more transitions metals may be referred to as a transition metal precursor salt and the salt(s) of one or more non-metallic elements may be referred to as non-metal salts.

The metal ions present in the Cr(III) salt, the cobalt salt and the one or more transition metal salts and/or non-metal salts may or may not be present in the form of a complex containing one or more ligands. By "ligands" here is meant complexing ligands other than H₂O. Preferably, the Cr(III) salt comprises a Cr(III) ion in the form of a complex with one or more ligands.

Although the cobalt salt and one or more further transition metal salts and/or non-metal salts are typically not added in the form of a complex when the electrolyte is created, in practice they may form complex ions with any excess ligand present in solution capable of forming such a complex (for instance an amino acid such as glycine). Thus, by way of example the cobalt ion may be present in the form of a glycine complex, and/or the further transition metal ion(s) may be present in the form of a glycine complex. Similarly, by example, the one or more non-metallic ion(s) may be present in the form of a glycine complex. Alternatively or additionally, one or more further complexing agents may be included in the electrolyte in order to form a complex with the cobalt and/or the further transition metal ion(s) and/or non-metal ions. A suitable complexing agent for this purpose is an amino acid or a carboxylic acid. Particular examples of such a complexing agent include citric acid or malic acid, or salts thereof.

It is preferred to provide the Cr(III) salt containing the Cr³⁺ ion (also referred to as the Cr(III) ion) in complex with one or more ligands as this can reduce the tendency of the Cr³⁺ ion to polymerise (which undesirably reduces its effective concentration and hence its availability for electrodeposition). For this reason, the ligand is typically a strong complexing agent, which binds strongly to the Cr³⁺ ion. In a preferred aspect, the Cr(III) salt comprises a complex ion containing Cr(III) and an amino acid or a carboxylic acid, preferably wherein the Cr(III) salt comprises a complex ion containing Cr(III) and glycine or formic acid. It is particularly preferred that the Cr(III) salt comprises a complex ion containing Cr(III) and glycine, as although both glycine and formic acid are highly effective, formic acid is toxic and so may be avoided for convenience. The complex ion may be, for example, [Cr(Gly)₃]³⁺, Gly being glycine. In practice, the complex ion may be associated additionally with one or more water molecules.

The Cr(III) salt comprising a Cr(III) ion in complex with one or more ligands is typically produced by heating a Cr(III) salt (wherein the chromium ion is not complexed) with one or more complexing agents. For instance, the Cr(III) salt comprising a Cr(III) ion in complex may be produced by heating another Cr(III) salt in an aqueous solution comprising an amino acid or a carboxylic acid (preferably glycine or formic acid). Processes for producing such complexes of Cr(III) ions are known in the art. The other Cr(III) salt, wherein the chromium ion is not complexed, is not particularly limited. It may be, for instance, a Cr(III) nitrate; a Cr(III) halide, a Cr(III) sulphate, a Cr(III) sulphite, a Cr(III) sulphonate, and so on. Particular examples of such other Cr(III) salts include Cr(III) chloride and Cr(III) sulphate.

Regardless of whether or not the Cr³⁺ ion is in complex form, the Cr(III) salt comprises a counter-ion in addition to the Cr(III) species. The counter-ion is not particularly limited. Typical counter-ions include nitrate, halide, carboxylate, sulphate, sulphide or sulphonate. Particular examples of counter-ions include chloride and sulphate. Typical examples of the Cr(III) salt include a Cr(III) chloride or a Cr(III) sulphate salt, optionally wherein the Cr(III) ion is complexed with a complexing agent.

The electrolyte also comprises one more further transition metal salts and/or non-metal salts selected from C, N, P or B salts. The oxidation state of the one or more further transition metal ions within the one or more further transition metal salt(s) is not particularly significant. The oxidation state of the one or more further transition metal ions within the one or more non-metal salt(s) is not particularly significant. In addition to a transition metal ion, the further transition metal salt(s) comprise a counter-ion. The counter-ion is not particularly limited and may be, for instance, nitrate, halide, carboxylate, sulphate, sulphide or sulphonate. In addition to a non-metal ion, the further transition metal salt(s) comprise a counter-ion. The counter-ion is not particularly limited and may be, for instance, H⁺ or ammonium. In some embodiments the one or more further transition metal salts include a nickel salt, wherein the transition metal ion is typically a nickel (II) ion. For such embodiments, a preferred example of a counter-ion within the nickel (II) salt is a chloride ion, as nickel(II) and chloride ions dissociate easily and effectively in solution. Thus, in a preferred aspect, the nickel salt may be NiCl₂ (optionally including water molecules of hydration).

The electrolyte also comprises a cobalt salt. The oxidation salt of the cobalt ion within the cobalt salt is not particularly significant, but the salt is typically a cobalt (II) salt. In addition to a cobalt ion, the cobalt salt comprises a counter-ion. The counter-ion is not particularly limited and may be, for instance, nitrate, halide, carboxylate, sulphate, sulphide or sulphonate. A preferred example of a counter-ion within the cobalt (II) salt is an acetate or sulphate ion. Thus, in a preferred aspect, the cobalt salt may be CoAc₂ (Ac being an acetate ion) or CoSO₄ (optionally including water molecules of hydration).

In a preferred example of the electrolyte, the nickel salt is nickel chloride and the cobalt salt is cobalt acetate. In a particularly preferred example of the electrolyte, the Cr(III) salt comprises a Cr(III) ion complexed with glycine and either a chloride or sulphate counter-ion; the nickel salt is NiCl₂ and the cobalt salt is CoAc₂ (Ac being an acetate ion).

The electrolyte may comprise components in addition to those mentioned above. For example, the electrolyte may comprise one or more additives as described herein.

In an aspect, the electrolyte may comprise one or more additives as described herein. In particular, the electrolyte may comprise one or more of said additives, wherein the one or more said additives are in the form of nanoparticles.

The electrolyte may include one or more supporting salts. A supporting salt may improve the ability of the electrolyte to deposit a coating as described herein during the method of the invention. Without wishing to be bound by theory, it is speculated that the presence of supporting salts may make the current flow through the electrolyte more uniform, and hence the electrodeposition process more efficient. Supporting salts (particularly chloride salts) may assist the activity of the suppressing agent. A supporting salt may be, for instance, a buffer species. A typical example of a supporting salt is a chloride salt.

Supporting salts, if they contain metal ions, generally contain metal ions which are difficult to reduce in order to minimise the likelihood that additional metals are deposited in the coating. For instance, additional metal salts may be salts of Group (I) or Group (II) metals. Typical examples of supporting salts may therefore include lithium, sodium, potassium, magnesium or calcium salts.

The agent may comprise a complexing agent, as described herein. The complexing agent may be an amino acid or a carboxylic acid. Preferred examples of the complexing agent include as glycine and formic acid.

Where the electrolyte is used in electrodeposition for producing the coated article, the pH of the electrolyte is typically acidic. An acidic pH is advantageous in that it can reduce the tendency of the Cr(III) ions in solution to polymerise and thus have reduced availability for an electrodeposition process. Accordingly, the pH of the electrolyte is generally less than 7. Preferably, the pH is from 1.5 to 4.5; for example, the pH of the electrolyte may be about 3.

### Suppressing agent

The function of the suppressing agent or solvent is to suppress the process or processes which compete with electrodeposition of chromium during the process described herein. The suppressing agent may suppress electrodeposition of cobalt, and/or evolution of hydrogen during the method.

Examples of the suppressing agent or solvent are polyethylene glycol (PEG), ethylene glycol and N, N-dimethylformamide (DMF). In some preferred embodiments, the suppressing agent does not comprises DMF as this is a relatively toxic agent, and thus can lead to difficulty in handling or disposing of electrolytes comprising the suppressing agent. Preferred examples are polyethylene glycol (PEG) and ethylene glycol. These species have been found to suppress both cobalt deposition and hydrogen evolution during the electrodeposition process for producing a coated article described herein. PEG and ethylene glycol may be used as the sole suppressing agent, or may be combined with each other and/or one or more other suppressing agents. Ethylene glycol is particularly preferred as a suppressing agent. In an aspect, the suppressing agent consists of ethylene glycol or polyethylene glycol; preferably ethylene glycol.

Where the suppressing agent comprises or consists of polyethylene glycol, the polyethylene glycol is generally a low molecular weight polyethylene glycol. For instance, the molecular weight of the polyethylene glycol may be up to 10000 Da, preferably up to 5000 Da, more preferably up to 2000 Da. The molecular weight of the polyethylene glycol may be, for instance, in the range of 200-10000 Da, or 200-5000 Da, or 200-2000 Da. Suitable examples of PEG which have shown efficacy as a suppressing agent include PEG 200, PEG 400 and PEG 600.

The electrolyte is typically prepared by mixing aqueous solutions of the various precursor salts (and any other species present, such as a complexing agent, a supporting salt, or an additive) with the suppressing agent (which is typically a liquid). It is therefore convenient to define the amount of suppressing agent present with reference to the volume of the electrolyte.

Generally, the electrolyte comprises up to 50% or 25% of the suppressing agent, expressed as a volume of the suppressing agent by total volume of the electrolyte (*i.e.* 50 or 25 v.v% of the electrolyte). For example, the electrolyte may comprise up to 15 v/v% of the suppressing agent. The electrolyte typically comprises at least 1 v/v% of the suppressing agent, and preferably at least 5 v/v% of the suppressing agent. Thus, the electrolyte usually comprises from 1 to 25 v/v% of the suppressing agent, and preferably comprises from 5 to 20 or 5 to 15 v/v% of the suppressing agent. By way of example the electrolyte may comprise about 8-12 v/v% of the suppressing agent, particularly about 10 v/v% of the suppressing agent.

Often, the only liquids present in the electrolyte are the suppressing agent (where the suppressing agent is a liquid) and water.

If the suppressing agent used is a heavier PEG, the suppressing agent may be a solid rather than a liquid. In such cases, it can be more convenient to express the quantity of suppressing agent present as a mass per unit volume of the electrolyte. The electrolyte may comprise, for instance, up to 100 g/L, more typically up to 50 g/L or up to 10 g/L or up to 1 g/L of suppressing agent. Generally, the electrolyte comprises at least 0.01 g/L of suppressing agent and more usually at least 0.1 g/L, for example at least 0.5 g/L or at least 2 g/L of suppressing agent. The electrolyte may therefore comprise from 0.01-100 g/L of suppressing agent, for instance 0.1-50 g/L or 1 to 50 g/L, or from 0.1 to 10 g/L or 0.1 to 1 g/L of suppressing agent.

### Process for producing a coated article

Also described herein is a process for producing a coated article comprising a substrate and a coating, the process comprising:
- providing a substrate;
- depositing a coating on the substrate
wherein the coating comprises 9.5 to 35 wt% chromium; 10 to 75 wt% cobalt; and 10 to 60 wt% one or more further transition metals and/or one or more non-metallic elements selected from C, P, N and B. The coated article may preferably be a coated cathode or a coated separator (i.e. a coated membrane/diaphragm).

The process of the invention may further comprise steps of
- providing an electrolyte, which comprises water; a Cr(III) salt; a cobalt salt; one or more further transition metal salts and/or one ore more non-metallic elements selected from C, P, N and B, and a suppressing agent;
- contacting the substrate with the electrolyte; and
- depositing a coating on the substrate by applying an electrical current to the substrate;
wherein preferably the substrate comprises a conductive material, typically graphene, graphite or a metal substrate, preferably a metal substrate, wherein said metal substrate is typically a cathode.

In other embodiments, the process further comprises steps of providing one or more solutions comprising water, a Cr(III) salt, a cobalt salt, one or more further transition metal salts and/or one or more non-metal salts, and optionally a suppressing agent. In such embodiments the step of depositing the material typically comprises hydrothermal thermal treatment, solvothermal synthesis or electrodeposition.

Also described herein is a process for producing a coated article comprising a metallic substrate and a coating, the process comprising:
- providing a cathode, which comprises a substrate, in particular a metallic substrate;
- providing an electrolyte, which comprises water, a Cr(III) salt, a cobalt salt, one or more further transition metal salts, and/or non-metal salts, selected from boron, phosphorus and carbon salts, and a suppressing agent;
- contacting the cathode with the electrolyte; and
- depositing a coating on the metallic substrate by applying an electrical current to the cathode
wherein the coating comprises 9.5 to 35 wt% chromium; 10 to 75 wt% cobalt; and 10 to 60 wt% one or more further transition metals and/or one or more non-metallic elements selected from C, P, N and B.

Also described herein is a process for producing a coated article comprising a metallic substrate and a coating, the process comprising:
- providing a cathode, which comprises a substrate, in particular a metallic substrate;
- providing an electrolyte, which comprises water, a Cr(III) salt, a cobalt salt, one or more further transition metal salts, and a suppressing agent;
- contacting the cathode with the electrolyte; and
- depositing a coating on the metallic substrate by applying an electrical current to the cathode
wherein the coating comprises 9.5 to 35 wt% chromium; 10 to 75 wt% cobalt; and 10 to 60 wt% one or more further transition metals.

This process may be described as an electrodeposition process, or a galvanic deposition process. The applied electrical current reduces metal ions in solution and causes them to become deposited on the cathode. A particular advantage of an electrodeposition method is that it enables Cr, Co, and further transition metals and/or non-metallic elements selected from C, P, N and B to be deposited in high quantities, simultaneously and homogeneously, despite their differing reduction potentials.

The "coated article" directly produced by the above process comprises the cathode and the coating deposited thereon.

Typically, the coated article is as described herein (in particular, the substrate utilised in the method is typically a metallic substrate as described herein and the coating deposited thereon is typically a coating as described herein in connection with the coated article). Similarly, the electrolyte and its components are typically as described herein.

Thus, the coated article as described herein may be obtained or obtainable by this method.

Additionally, the above method may optionally be followed by one or more further steps. Thus, the invention also relates to a process comprising one or more such further steps, and to an article obtained or obtainable by this method, followed by one or more additional steps.

By way of example, the method may comprise one or more of any of the following steps, after the process described above:
- repeating the process one or more times;
- washing the coated article;
- cleaning the coated article (for instance by treatment with an acid or alkali);
- heat-treating the coated article.

In embodiments wherein the method comprises steps of
- providing an electrolyte, which comprises water; a Cr(III) salt; a cobalt salt; one or more further transition metal salts and/or non-metal salts; and a suppressing agent;
- contacting the cathode with the electrolyte; and
- depositing a coating on the metallic substrate by applying an electrical current to the cathode;
the method may also comprise one or more of the following steps:
- assembling an electrolyser wherein the cathode comprises the coated article;
- assembling a fuel cell wherein the anode comprises the coated article.

When the process is an electrodeposition process, the process may alternatively or additionally comprise one or more preliminary steps preceding the electrodeposition process described above. For instance, the process may initially involve preparing the electrolyte. In that case, the process may involve:
(a) providing an aqueous solution comprising a Cr(III) salt wherein the Cr(III) ion is not complexed;
(b) heating said aqueous solution with a complexing agent to produce a solution comprising a Cr(III) salt wherein the Cr(III) ion is in the form of a complex with the complexing agent; and
(c) mixing the solution comprising the Cr(III) ion in the form of a complex with a suppressing agent.

The process may involve allowing the solution to cool between step (b) and step (c), or after step (c) and prior to the deposition process.

One or more further transition metal salt(s) and/or one or more non-metal salts and/or the cobalt salt may be present in the aqueous solution provided in step (a). If not, one, some or all of these salts may be added later (either in solution or as solids) between steps (b) and (c) or after step (c).

During step (b), the aqueous solution is typically heated to a temperature between 50 °C and 100 °C; preferably between 60 °C and 90 °C; for example about 80 °C.

The Cr(III) salt, complexing agent, cobalt salt and one or more transition metal salts and/or non-metal salts are as described herein.

Generally, when the coating is formed using the electrodeposition process described herein the coating directly contacts the substrate. That is, the coating is generally electrodeposited directly onto the substrate. For completeness, though, it should be borne in mind that the metallic substrate may itself comprise a metallic coating (which is not a coating according to the invention). For instance, the metallic substrate may consist primarily of a first metal but may also comprise a metallic coating, onto which coating the coating of the invention is electrodeposited.

It has been found that, during the process, the particular electrical conditions used have little effect on the quantity of Cr deposited, and on the percentage of Cr deposited during the process. Accordingly, the current and/or voltage to be applied during the process are not particularly limited. Higher voltages and current may achieve quicker deposition but are likely to be more costly in terms of energy.

The process is typically performed at a temperature between room temperature and 50 °C, for instance between 15 °C and 50 °C. Preferably, the process is performed at a temperature of 30 °C to 45 °C, for example about 30 °C.

During the electrodeposition process described herein, a metallic substrate is used as the cathode. The nature of the anode is not particularly limited. The anode could comprise a metallic substrate, but could equally be a graphite anode or an anode of any other conductive material. Typically, a graphite anode is used. The system may optionally also comprise one or more additional electrodes, such as a reference electrode; as with the anode, the material used for the reference electrode (where present) is not particularly limited. A reference electrode may for instance comprise a metallic substance or graphite.

### EXAMPLES

### 1. Preparation of coated articles

An electrolyte was prepared as follows. 0.15 moles of as-received Ni(Cl)₂·6H₂O (purity <99.5%, Sigma-Aldrich), 0.4 moles Cr(Cl)₃·6 H₂O (purity >98%, Sigma-Aldrich), 0.025 moles CoSO₄·6 H₂O (purity >98%, Sigma-Aldrich) and 1.5 moles of Glycine (purity >98%, Sigma-Aldrich) were dissolved in 900mL of deionized (DI) water under stirring and heated to 60 °C for 2 hours. The solution was then cooled to 30 °C. 100 ml ethylene glycol was added. The pH of the solution was adjusted to 2.8.

Various metallic substrates were provided. In one case, the substrate was a nickel foam comprising cavities of 100-200 microns in diameter. In another case, the substrate was a nickel mesh having a mesh hole size of 1-30 microns. In both cases, the nickel surface was initially further roughened by pickling in hydrochloric acid. In the following tables and spectra, reference is made to the experiment performed on the nickel foam.

An electrochemical cell was prepared comprising one of the aforementioned metallic substrates as the cathode; the electrolyte; and two graphite anodes. An electrodeposition process was performed by applying a current density of 0. 1A/cm² for 20 minutes.

The surface was analysed by EDS, using an Oxford Instruments EDS system. EDS imaging occurs over an area of the surface, calculating the average weight % across that area. Thus, EDS measurements provide a representative sample of the average weight % of the coating. EDS measurements provide a MapSum spectrum. The following elemental composition at the surface was observed, based on a MapSum spectrum:

**Table 1: coating of the example**

| **Map Sum Spectrum** | | | | |
|---|---|---|---|---|
| **Element** | **Line Type** | **Weight %** | **Weight % Sigma** | **Atomic %** |
| Co | K series | 57.69 | 0.21 | 48.96 |
| O | K series | 5.92 | 0.10 | 18.52 |
| Cr | K series | 10.79 | 0.10 | 10.38 |
| Ni | K series | 24.88 | 0.21 | 21.20 |
| Cl | K series | 0.29 | 0.03 | 0.42 |
| K | K series | 0.42 | 0.03 | 0.53 |
| Total | | 100.00 | | 100.00 |

Evidently, a large amount (>9.5 wt%) of Cr had been successfully deposited.

The experiments were repeated using PEG 200, PEG 400 and PEG 600 respectively instead of ethylene glycol. Similar results were observed. For instance, the following table describes the elemental composition achieved using a process as described in connection with table 1, except that PEG 400 was used in place of ethylene glycol. PEG 400 was added to a quantity of 20 ml/L.

**Table 2: elemental composition using PEG rather than EG**

| **Spectrum 3** | | | | |
|---|---|---|---|---|
| **Element** | **Line Type** | **Weight %** | **Weight % Sigma** | **Atomic %** |
| O | K series | 7.51 | 0.25 | 22.80 |
| Cr | K series | 9.93 | 0.17 | 9.28 |
| Co | K series | 58.23 | 0.38 | 48.01 |
| Ni | K series | 23.76 | 0.35 | 19.66 |
| In | L series | 0.58 | 0.14 | 0.24 |
| Total | | 100.00 | | 100.00 |

It was still possible to deposit >9.5 wt% chromium and >20 wt% nickel, together with nearly 60 wt% cobalt, demonstrating that PEG is a suitable alternative to ethylene glycol for this procedure.

### 2. Variation of substrate

A further article was produced using a similar process to that described in (1), except that the substrate utilised was a copper mesh rather than a nickel mesh or nickel foam. The following elemental composition at the surface was observed:

**Table 3: coating of the copper mesh**

| **Element** | **Weight %** |
|---|---|
| Ni | 53.64 |
| Co | 25.39 |
| Cr | 16.00 |
| Cu | 2.77 |
| O | 2.20 |

### 3. Comparative examples

All SEM images discussed were obtained using a Hitachi TM2000 or TM4000.

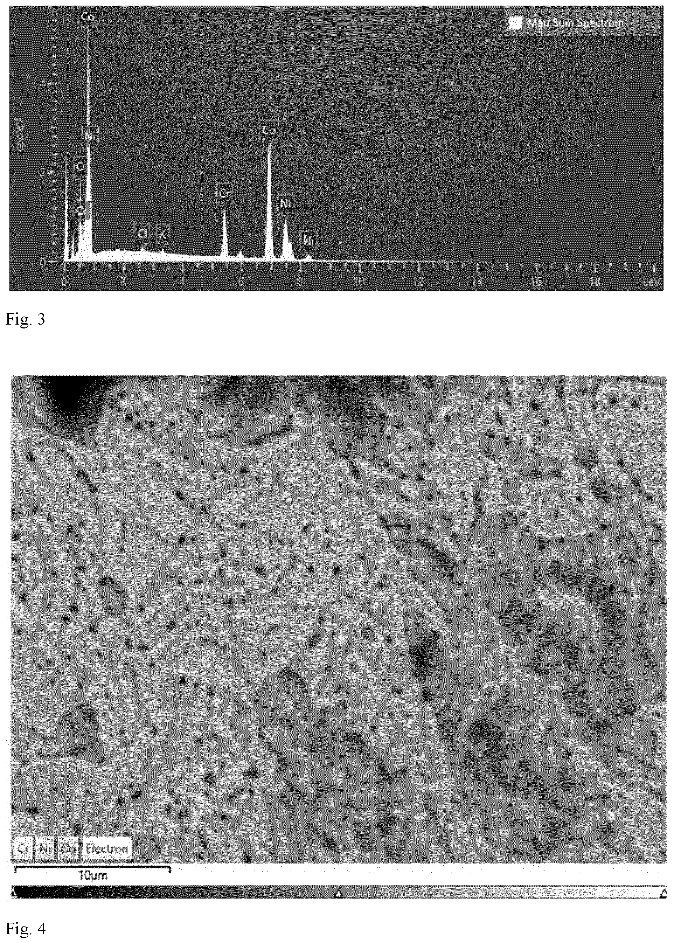

The process of example 1 above was repeated in the absence of a further transition metal salt in the electrolyte. The observed elemental composition of the coating is shown in table 4, and the underlying Map Sum spectrum is shown in Figure 3.

**Table 4: coating produced without further transition metal salt**

| **Map Sum Spectrum** | | | | |
|---|---|---|---|---|
| **Element** | **Line Type** | **Weight %** | **Weight % Sigma** | **Atomic %** |
| O | K series | 4.48 | 0.10 | 14.42 |
| Cr | K series | 12.28 | 0.12 | 12.16 |
| Co | K series | 78.03 | 0.23 | 68.14 |
| Cl | K series | 0.83 | 0.04 | 1.21 |
| K | K series | 0.51 | 0.04 | 0.67 |
| Ni | K series | 3.44 | 0.19 | 3.02 |
| Fe | K series | 0.42 | 0.09 | 0.39 |
| Total | | 100.00 | | 100.00 |

The total amount of further transition metals observed was less than 5 wt%, but nickel was still present (as is seen in table 2 and figure 3). This indicates that in the absence of the further transition metal salt, the process described herein does not lead to complete coverage of the substrate and the nickel substrate remains exposed.

In addition, the amount of cobalt was high (>75 wt%), indicating a coating susceptible to corrosion.

The process of example 1 was also repeated in the absence of the suppressing agent ethylene glycol. The observed elemental composition of the coating is shown in table 5.

**Table 5: coating produced without suppressing agent.**

| **Map Sum Spectrum** | | | | |
|---|---|---|---|---|
| **Element** | **Line Type** | **Weight %** | **Weight % Sigma** | **Atomic %** |
| Co | K series | 72.85 | 0.30 | 69.27 |
| Ni | K series | 23.72 | 0.29 | 22.64 |
| O | K series | 1.74 | 0.08 | 6.10 |
| Cr | K series | 1.29 | 0.07 | 1.39 |
| K | K series | 0.23 | 0.03 | 0.33 |
| Cl | K series | 0.17 | 0.03 | 0.27 |
| Total | | 100.00 | | 100.00 |

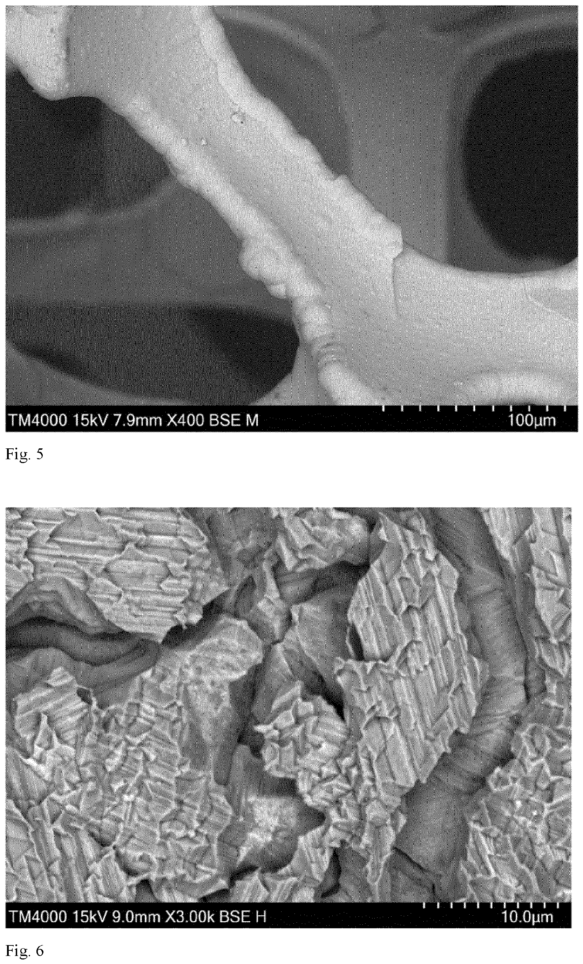

It is clear that the deposition of chromium was unable to compete with the deposition of cobalt and nickel, and the amount of chromium present is less than 1 wt%. This indicates a coating highly susceptible to corrosion. Further, an SEM image of the coating is shown in figure 5. The uneven distribution of the coating is clearly visible, showing that the coating is not homogenous. A similar SEM image of the above-discussed coated nickel mesh (prepared as discussed in example 1 except that the suppressing agent was omitted) is shown in figure 6. The uneven nature of the coating is somewhat visible and was confirmed by EDS.

The process of example 1 above was further repeated in the absence of a further transition metal salt and in the absence of the suppressing agent ethylene glycol. The observed elemental composition of the coating is shown in table 6, and an EDS image of the surface is shown in figure 4.

**Table 6: coating produced without nickel salt or suppressing agent**

| **Map Sum Spectrum** | | | | |
|---|---|---|---|---|
| **Element** | **Line Type** | **Weight %** | **Weight % Sigma** | **Atomic %** |
| Cr | K series | 4.89 | 0.06 | 3.91 |
| Co | K series | 70.55 | 0.29 | 49.78 |
| O | K series | 2.35 | 0.06 | 6.10 |
| Ni | K series | 12.44 | 0.16 | 8.81 |
| Cl | K series | 0.24 | 0.02 | 0.28 |
| K | K series | 0.23 | 0.02 | 0.24 |
| Fe | K series | 0.44 | 0.06 | 0.33 |
| C | K series | 8.79 | 0.32 | 30.42 |
| Si | K series | 0.09 | 0.02 | 0.13 |
| Total | | 100.00 | | 100.00 |

The table shows that the amount of Cr is less than 5 wt%, indicating that the coating is subject to corrosion. The table also shows that the amount of Ni is low but not non-zero, meaning that the coating was not homogenous and that patches of substrate were exposed. In Figure 4, the density of Cr, Ni and Co is represented by colour density; Cr in yellow, Ni in blue and Co in green. It can be clearly seen that some areas are more yellow, while other areas are more blue, demonstrating that in the absence of all components of the electrolyte, the element coverage produced is not homogenous

### 4. Accelerated degradation test

To assess the efficacy of the coating described herein in preventing corrosion, an accelerated degradation test was performed. A nickel foam produced as in example 1, and a nickel foam as produced in the comparative example wherein the suppressing agent was omitted, were utilised in the test. Under the test conditions, the sample was placed in a beaker with 50% KOH at 125°C for 5 hours. This simulates the conditions which occur in an electrolyser under alkaline conditions, during shutdowns.

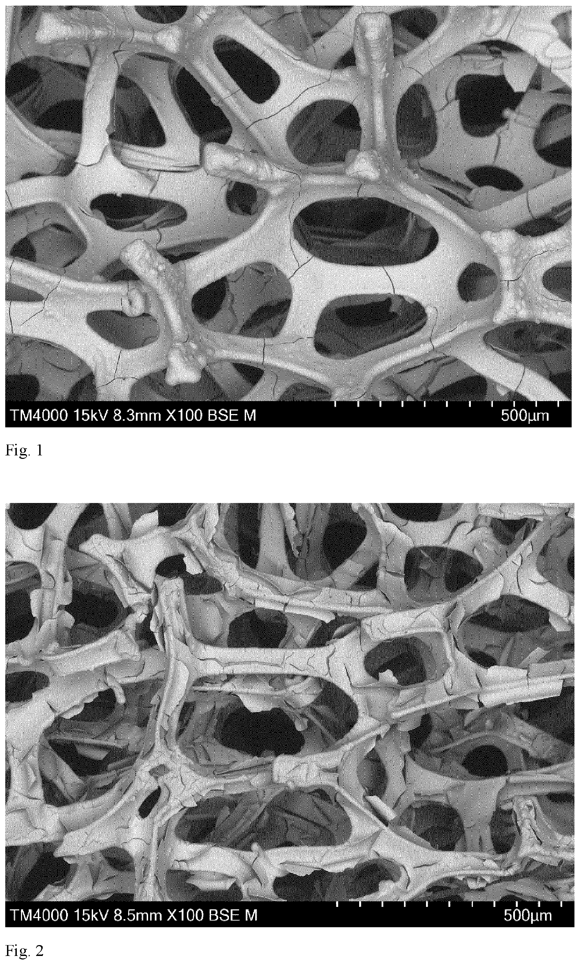

The sample produced as described herein (as in figure 1) survived the conditions well, with little unevenness appearing in the coating. By contrast, the sample of the comparative example was visibly highly degraded; not only the coating but also the underlying substrate appear to have significantly degraded.

### 5. Efficiency of hydrogen production and effect of additives

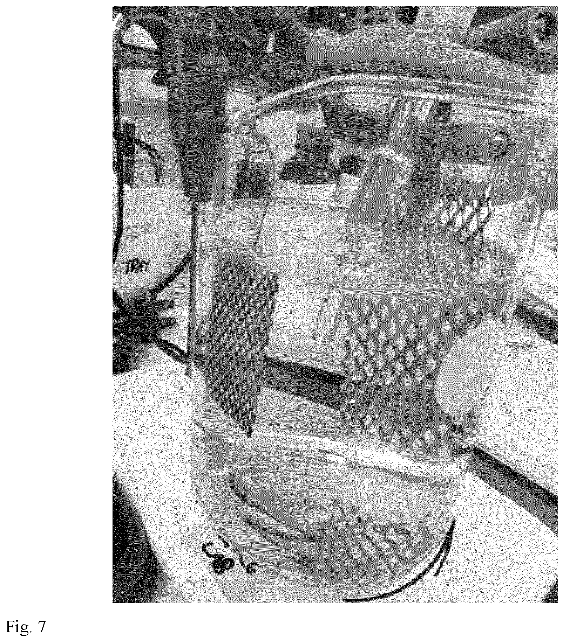

A basic electrolyser setup was produced to test the efficacy of the coatings described in the production of hydrogen. An image of the apparatus is shown in Figure 7. The apparatus contained a cathode; an AgCl reference electrode, and a platinised titanium mesh. The electrolyte was an aqueous alkaline solution of 1M KOH at room temperature. The potentiostat used was a Metrohm Vionic.

The cathodes used were as follows.
(a) nickel mesh
(b) nickel mesh coated with pure cobalt
(c) nickel mesh coated with a coating comprising 9.5 to 35 wt% chromium, 10 to 75 wt% cobalt and 10 to 60 wt% Ni;
(d) nickel mesh coated with a coating comprising 9.5 to 35 wt% chromium, 10 to 75 wt% cobalt and 10 to 60 wt% nickel, together with graphene oxide nanoparticles;
(e) nickel mesh coated with a coating comprising 9.5 to 35 wt% chromium, 10 to 75 wt% cobalt and 10 to 60 wt% nickel, together with molybdenum;
(f) nickel mesh coated with a coating comprising 9.5 to 35 wt% chromium, 10 to 75 wt% cobalt and 10 to 60 wt% nickel, together with iron.

Where the graphene oxide nanoparticles were included in the coating, this was achieved by sonicating a mixture of powdered graphene oxide mixed with deionised water and including that in the electrolyte during electrodeposition of the coating to include the additive.

Molybdenum and iron were incorporated instead by codeposition of the metal. In order to include molybedenum, NaMoO₄ was dissolved and included in the electrolyte used to produce the coated article. In order to include iron, iron sulphate was dissolved and included in the electrolyte.

The cathodes were used to electrolyse the electrolyte, over a range of cathode potentials varying from -1.8V to -0.8 V. The current was measured as the potential varied. A larger magnitude of current indicated more effective hydrolysis of water, and greater production of hydrogen.

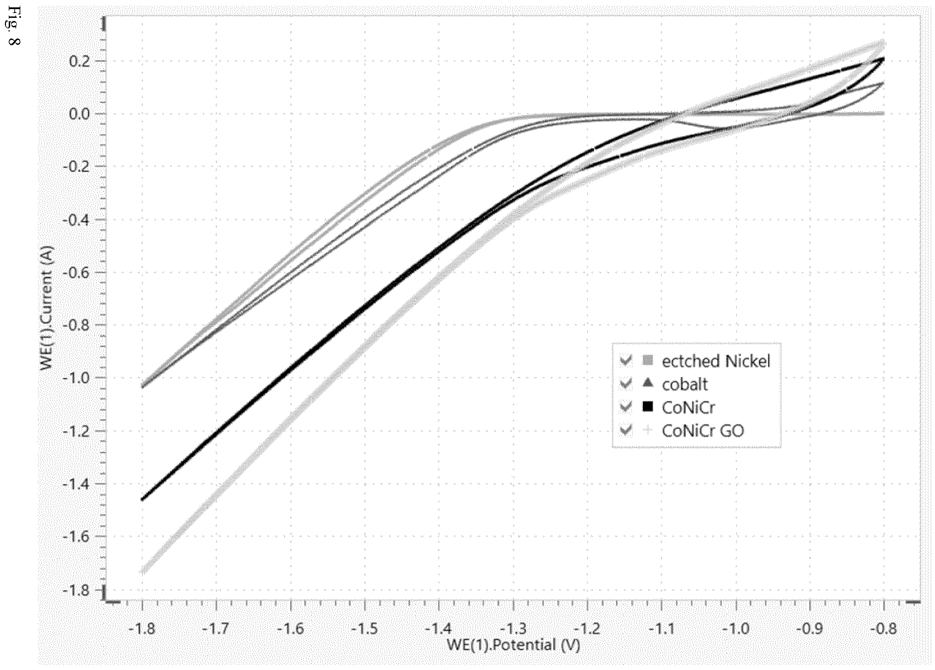

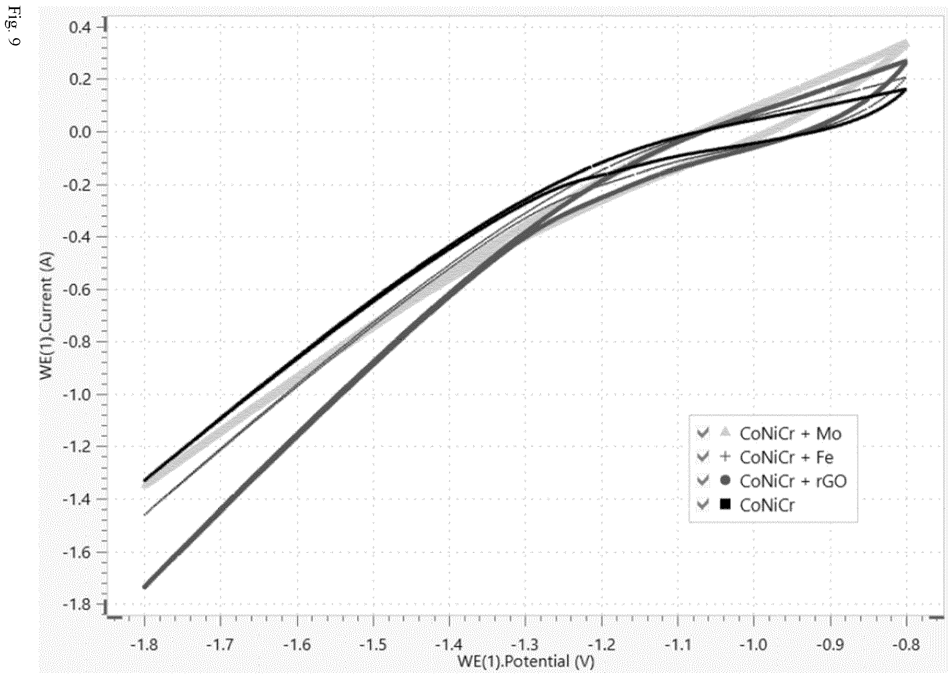

The results are shown in Figures 8 and 9. It can be seen from Figure 8 that a cobalt surface (b) is slightly more effective at generating hydrogen than an etched nickel surface (a), but that the coating of the invention (c) is much more effective than either, particularly at larger potentials. Moreover, it can be seen from line (d) that graphene oxide nanoparticles present in the coating produced a significant further improvement in the efficacy of hydrogen production.

Figure 9 compares the effect of various different additives on the hydrogen production efficiency of the coating (c) comprising nickel, chromium and cobalt. All additives (Mo, Fe and graphene oxide "rGO") improved hydrogen production efficiency, but graphene oxide was most effective.

### 6. Further degradation test

To further assess the efficacy of a coating in preventing corrosion, an accelerated degradation test was performed. A coated nickel foam was produced as in example 1 using around 10% by volume ethylene glycol based on the total volume of the electrolyte. A further coated nickel foam was produced as a comparative example wherein the suppressing agent (ethylene glycol) was omitted. The resulting coated electrodes were utilised in the test.

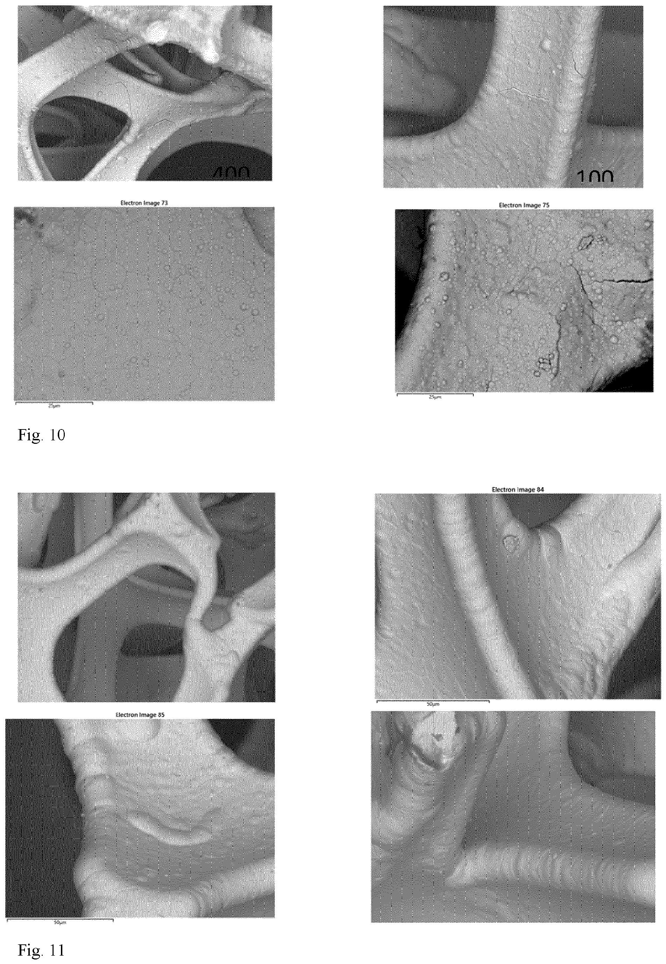

The observed elemental composition of the coating *with* the additive was measured and is displayed in Table 6 below. SEM images of the surface are shown in Figure 10. As can be seen in Figure 10, a coating prepared using an additive as described herein is evenly distributed across the surface of the substrate.

**Table 6**

| **Map Sum Spectrum** | | | |
|---|---|---|---|
| **Element** | | Weight % | Atomic % |
| | **C** | 9.74 | 34.16 |
| | **Cr** | **12.99** | **10.52** |
| | **Co** | 47.87 | 34.22 |
| | **Ni** | 29.40 | 21.10 |

The observed elemental composition of the coating *without* the additive was measured and is displayed in Table 7 below. SEM images of the surface are shown in Figure 11. As can be seen from the table below chromium deposition was unable to complete with the deposition of cobalt and nickel, and the amount of chromium present is less than 5 wt%. The uneven distribution of the coating is clearly visible in Figure 11, showing that the coating is not homogenous.

**Table 7**

| **Map Sum Spectrum** | | |
|---|---|---|
| **Element** | Weight % | Atomic % |
| **C** | 17.07 | 50.11 |
| **Cr** | **2.70** | **1.83** |
| **Co** | 55.46 | 33.18 |
| **Ni** | 24.77 | 14.87 |

Under the test conditions, each sample was placed in a beaker with 50% KOH at 125°C for 5 hours. This simulates the conditions which occur in an electrolyser under alkaline conditions, during shutdowns.

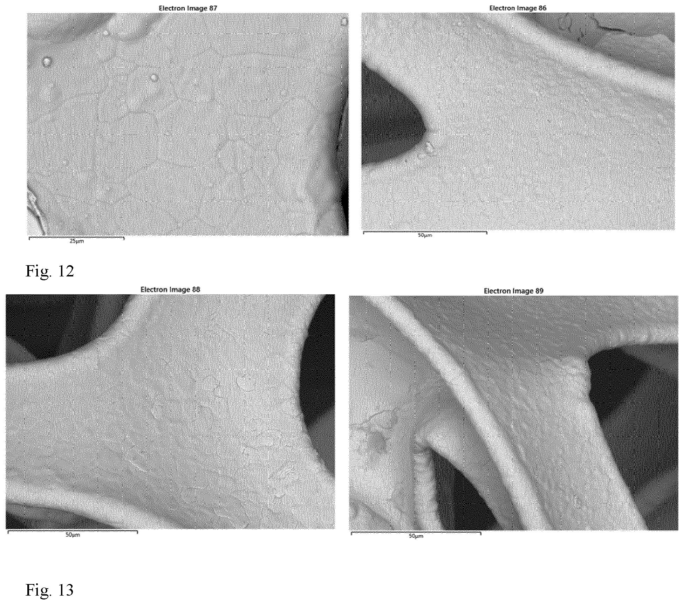

The results are shown in Figure 12 (coating of the invention) and Figure 13 (comparative example). The sample produced as described herein (as in Figure 10) clearly survived the conditions well, with little unevenness appearing in the coating. By contrast, the sample of the comparative example was visibly highly degraded; not only the coating but also the underlying substrate appear to have significantly degraded.

Furthermore, the percentage weight of the coating of each coating was assessed with a Map Sum Spectrum. The results are displayed in Tables 8 (coating of the invention) and 9 (comparative example) below.

**Table 8**

| **Map Sum Spectrum** | | |
|---|---|---|
| **Element** | Weight % | Atomic % |
| **C** | 5.25 | 21.12 |
| **Cr** | 9.52 | 8.85 |
| **Co** | 46.59 | 38.22 |
| **Ni** | 38.64 | 31.81 |

**Table 9**

| **Map Sum Spectrum** | | |
|---|---|---|
| **Element** | Weight % | Atomic % |
| **C** | 12.26 | 40.58 |
| **Cr** | 0 | 0 |
| **Co** | 6.89 | 4.65 |
| **Ni** | 80.85 | 54.77 |

The percentage difference between the elemental composition at each site pre- and post-KOH treatment was calculated, and is displayed in Tables 10 (with additive) and 11 (without additive) below. While there is some minor variation at all sites (due to difficulty in measure the exact same site at different times), it is clear that the change in the composition is significantly greater for the coating without the additive. Due to the lack of chromium present it is subject to significant degradation. In particular, it can be seen that after KOH treatment the amount of chromium and cobalt present on the surface of the substrate decreases significantly in the comparative example where the additive was not used. In contrast little variation is seen in the coating prepared according to the invention, even after KOH treatment.

### With additive

**Table 10**

| **Map Sum Spectrum** | **Pre KOH w/w%** | **POST KOH w/w%** | **% difference** |
|---|---|---|---|
| **Element** | | | |
| **C** | 9.74 | 5.25 | -46.10% |
| **Cr** | **12.99** | **9.52** | -11.32% |
| **Co** | 47.87 | 46.59 | -2.67% |
| **Ni** | 29.40 | 38.64 | 31.43% |

### Without additive

**Table 11**

| **Map Sum Spectrum** | **Pre KOH w/w%** | **POST KOH w/w%** | **% difference** |
|---|---|---|---|
| **Element** | | | |
| **C** | 17.07 | 12.26 | -28.18% |
| **Cr** | **2.70** | **0** | -100.00% |
| **Co** | 55.46 | 6.89 | -87.58% |
| **Ni** | 24.77 | 80.85 | 226.40% |

### 7. Activity of catalytic coating

A basic electrolyser setup was produced to test the efficacy of the coatings described in the production of hydrogen. An image of the apparatus is shown in Figure 20. The analysis was performed in an ElyFlow cell obtained by Gaskatel. The apparatus contained a cathode; a hydrogen reference electrode, and a counter electrode comprising a 99.99% nickel sheet. The electrolyte was an aqueous alkaline solution of 8M KOH at room temperature. The scan rate was 50 mVs⁻¹. iR compensation was developed to correct for the voltage loss (i.e. iR drop) caused by the electrolyte solution between the working electrode and the reference electrode, where R stands for the resistance of the electrolyte solution. The potentiostat used was a Metrohm Vionic.

The cathodes used were low surface area catalysts comprising the following coatings:
(a) pure chromium
(b) pure cobalt
(c) coating as detailed in Table 12 below.

**Table 12**

| Map Sum Spectrum | | |
|---|---|---|
| Element | Weight % | Atomic % |
| C | 12.89 | 41.57 |
| Cr | 13.70 | 10.20 |
| Co | 73.41 | 48.23 |

The cathodes were used to electrolyse the electrolyte, over a range of cathode potentials varying from -0.3V to 0.0 V. The current was measured as the potential varied. A larger magnitude of current indicated more effective hydrolysis of water, and greater production of hydrogen.

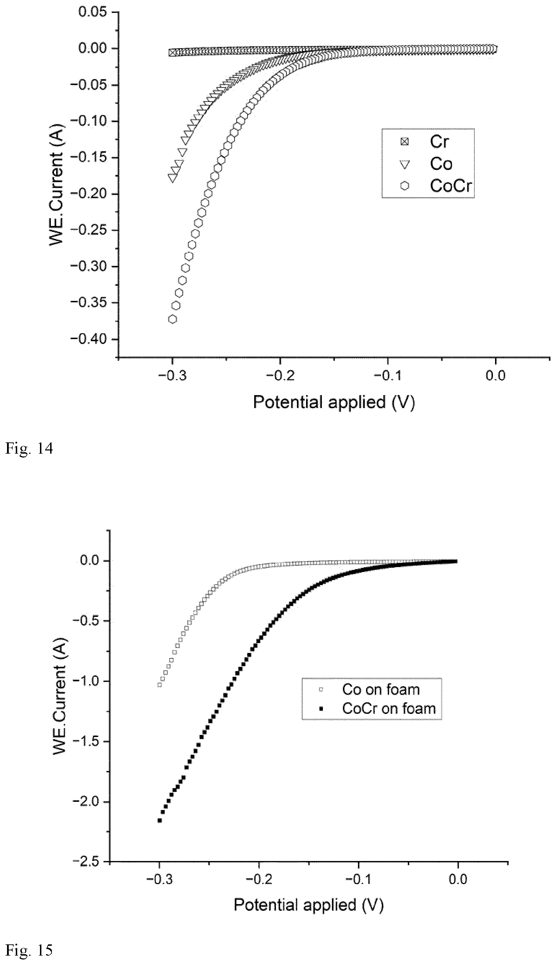

The results are shown in Figure 14. It can be seen from Figure 14 that a chromium surface has almost no activity alone, and a cobalt surface has some hydrogen generating activity, but that the comprising both cobalt and chromium is much more effective than either, particularly at larger potentials.

Further tests were performed using a nickel foam substrate as the substrate in the electrode, wherein the substrate was coating either with pure cobalt, or with a chromium-cobalt coating as described in Table 12. The results are shown in Figure 15. As can be seen in Figure 15, the cobalt chromium combination has significantly higher activity, in particular at larger potentials.

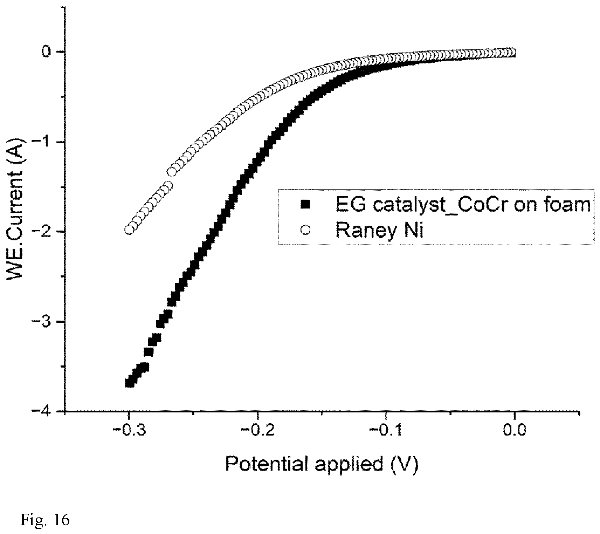

Using the same technique the activity of the catalyst of the Table 12 was also assessed in relation to a Raney Nickel catalyst, which is a commonly used catalyst in the field of hydrogen generation, and is known for its good activity. The results are shown in Figure 16, and show that the catalyst of the invention has much higher activity particularly at larger potentials. Furthermore, the catalyst of the invention has a lower overpotential than the nickel catalyst (i.e. starts producing hydrogen at a lower voltage).

### 8 - Comparison of activity on planar vs high surface area substrates

A basic electrolyser setup was produced to test the efficacy of the coatings described in the production of hydrogen. An image of the apparatus is shown in Figure 20. The analysis was performed in an ElyFlow cell obtained by Gaskatel. The apparatus contained a cathode; a hydrogen reference electrode, and a counter electrode comprising a 99.99% nickel sheet. The electrolyte was an aqueous solution of 8M KOH at room temperature. The scan rate was 50 mVs⁻¹. iR compensation was developed to correct for the voltage loss (i.e. iR drop) caused by the electrolyte solution between the working electrode and the reference electrode, where R stands for the resistance of the electrolyte solution. The potentiostat used was a Metrohm Vionic.

The cathodes used were as follows.
(a) a planar cathode comprising a coating according to Table 13

**Table 13**

| **Elements** | **Percentage weight based on total weight of coating** |
|---|---|
| Ni | 37.68 |
| Co | 34.9925 |
| Cr | 16.5725 |
| C | 10.7575 |

(b) a sheet of platinum
(c) a nickel foam cathode comprising a coating according to Table 14

**Table 14**

| | **Percentage weight based on total weight of the coating** |
|---|---|
| **Elements** | **Site 1** |
| Ni | 40.92 |
| Co | 35.54 |
| Cr | 10.34 |
| C | 13.17 |

(d) Raney nickel catalyst on a high surface area substrate
(e) platinum carbon catalyst on a high surface area substrate.

The cathodes were used to electrolyse the electrolyte, over a range of cathode potentials varying from -0.3V to 0.0 V. The current was measured as the potential varied. A larger magnitude of current indicated more effective hydrolysis of water, and greater production of hydrogen.

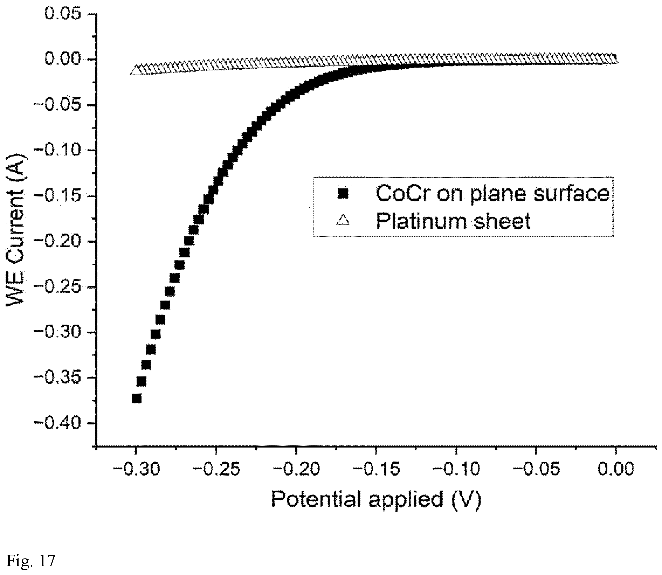

The results comparing (a) and (b) are shown in Figure 17. As can be seen, the cobalt chromium catalyst has much higher activity particularly at larger potentials, than platinum on a flat surface. This can be useful as it means that the catalytic coating of the invention is effective even for simpler lower surface area electrodes, which are easier to construct.

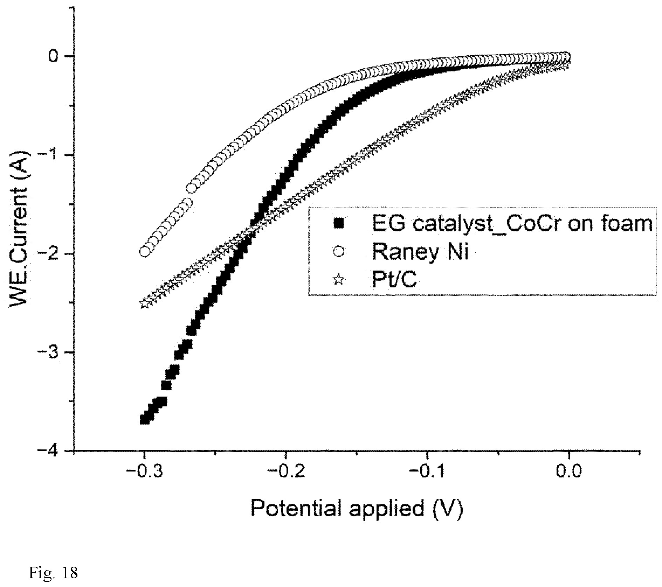

Similarly, the results comparing (c), (d) and (e) are shown in Figure 18. It can be seen from Figure 18 that a cobalt chromium electrode is much more effective in hydrogen generation than either a Raney Nickel catalyst or a platinum carbon catalyst, particularly at larger potentials.

### 9 - Durability of the catalyst

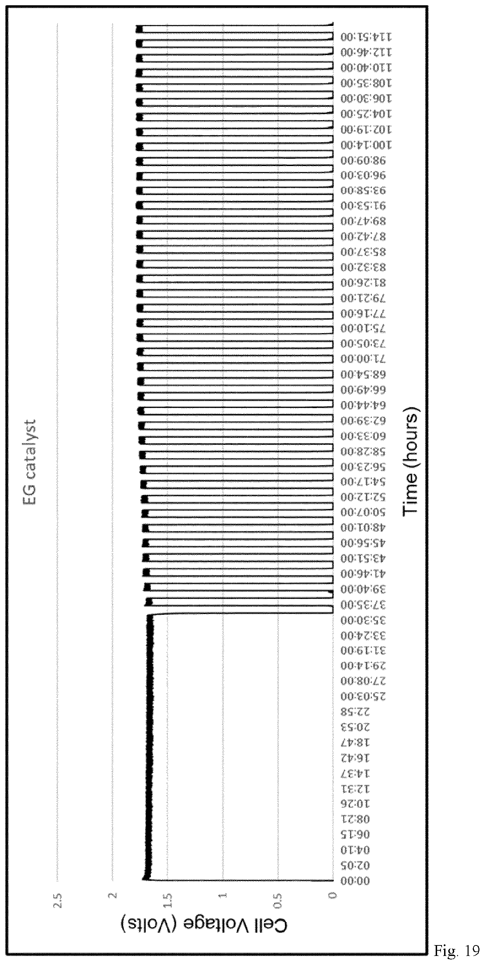

A basic electrolyser setup was produced to test the durability of the coatings of the present invention. The apparatus contained a cathode and a nickel anode. The electrolyte was an aqueous solution of 8M KOH at 85 °C. A current density of 0.5 A/cm² was applied over 36 hours. After the initial steady current period, the system was periodically shut down for one hour then turned on for an hour to simulate intermittent current. As shown in Figure 19, the catalyst was able to maintain its activity for over a hundred hours in this harsh environment.

The test was carried out on a nickel foam cathode comprising a coating according to Table 14 above.

## Claims

1. A method of electrolysing water, the method comprising:
- providing an electrolyser comprising an anode; a cathode and optionally a separator;
- contacting the cathode and/or the anode with an aqueous alkaline solution comprising water; and
- electrolysing the water using a potential difference from the anode to the cathode,
wherein at least one of the cathode and the separator comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B, and wherein the coating catalyses hydrogen evolution at the cathode.

2. A method according to claim 1, the method comprising:
- providing an electrolyser comprising an anode; a cathode and optionally and a separator;
- contacting the anode and the cathode with an aqueous alkaline solution comprising water; and
- electrolysing the water using a potential difference from the anode to the cathode,
wherein the cathode comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B.

3. A method according to claim 1, the method comprising:
- providing an electrolyser comprising an anode; a cathode and optionally a separator.
- contacting the anode and the cathode with an aqueous alkaline solution comprising water; and
- electrolysing the water using a potential difference from the anode to the cathode,
wherein the separator comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B.

4. The method according to any one of claims 1 to 3, wherein the coating comprises 9.5 to 20 wt% chromium; 20 to 60 wt% cobalt; and 20 to 55 wt% one or more further transition metals and/or one or more non-metallic elements selected from C, P, N and B.

5. The method according to any one of claims 1 to 4, wherein the one or more further transition metals and/or one or more non-metallic elements are one or more transition metals and are selected from iron, nickel and combinations thereof, preferably wherein the one or more further transition metals are nickel.

6. The method according to claim 5, wherein the coating additionally comprises one or more additives selected from ceramic nanoparticles, graphene, doped graphene, and graphene oxide.

7. The method according to any one of claims 1 to 6, wherein the substrate has a surface roughness of 0.1 to 100 microns, preferably 1 to 50 microns.

8. The method according to any one of claims 1 to 7, wherein the coating directly contacts the substrate, and the coating is exposed to the environment.

9. The method according to any one of claims 1 to 8, wherein the cathode comprises a substrate and a coating as defined in any one of claims 1, 2 or 4 to 8, wherein the substrate comprises or consists of steel, preferably stainless steel.

10. The method according to any of claims 1 to 9, wherein the aqueous alkaline solution is a potassium hydroxide solution.

11. An electrolyser comprising:
- a cathode;
- an anode;
- optionally a separator; and
- optionally an aqueous alkaline solution,
wherein at least one of the cathode and the separator comprises a substrate and a coating, wherein the coating comprises 9.5 to 35 wt% chromium; 10 to 75 wt% cobalt; and 10 to 60 wt% one or more further transition metals and/or one or more non-metallic elements selected from C, P, N and B, and wherein the coating is for catalysing hydrogen evolution at the cathode.

12. An electrolyser according to claim 11, wherein the cathode comprises a substrate and a coating, wherein the substrate and coating are as defined in any one of claims 2 or 4 to 9.

13. An electrolyser according to claim 11 or claim 12, wherein the aqueous alkaline solution is a potassium hydroxide solution.

14. Use of a coating, as a hydrogen evolution catalyst in a method of alkaline water electrolysis, wherein said coating is part of a coated article comprising a substrate and a coating, and wherein the coating comprises 9.5 to 35 wt% chromium; 10 to 75 wt% cobalt; and 10 to 60 wt% one or more further transition metals and/or one or more non-metallic elements selected from C, P, N and B.

15. Use according to claim 14, wherein said coated article is a cathode comprising a substrate and a coating as defined in any one of claims 2 and 4 to 9.
